# NEUE EUROPÄISCHE PATENTSCHRIFT

(11) **EP 0 653 573 B2**
(45) Veröffentlichungstag und Bekanntmachung des Hinweises auf die Entscheidung über den Einspruch: **31.03.2004**
(45) Hinweis auf die Patenterteilung: 09.09.1998
(21) Anmeldenummer: 94117642.2
(22) Anmeldetag: 09.11.1994
(51) Int. Cl.: F16C 11/06, F16C 33/10

(54) **Kugelgelenk**
Ball joint
Joint à rotule

(30) Priorität: 15.11.1993 DE 4338916
(43) Veröffentlichungstag der Anmeldung: 17.05.1995
(73) Patentinhaber: TRW Fahrwerksysteme GmbH & Co. KG, 40547 Düsseldorf (DE)
(72) Erfinder: Henkel, Günther, D 40468 Düsseldorf (DE)
(74) Vertreter: Stenger, Watzke & Ring Patentanwälte

(56) Entgegenhaltungen:
- EP-A- 0 355 537
- EP-A- 0 541 488
- DE-A- 1 953 396
- DE-A- 3 326 960
- DE-A- 4 212 346
- DE-C- 3 823 777
- DE-U- 7 424 445
- DE-U- 9 112 053
- FR-A- 2 216 853

## Beschreibung

Die Erfindung betrifft ein Kugelgelenk für Kraftfahrzeuge mit einer zwischen einem Gelenkgehäuse und einem Kugelkopf eines dreh- bzw. kippbeweglichen Kugelzapfens eingesetzten Lagerschale aus einem elastischen Kunststoff, die mit ihrer Außenfläche im Gelenkgehäuse abgestützt ist, wobei unter dem Einfluß einer Gelenkvorspannung oder -belastung auf der Innenseite der Lagerschale mit Schmierstoff gefüllte Bereiche ausgebildet sind.

Derartige Kugelgelenke sind bekannt. Sie erlauben sowohl eine,Verdreh- als auch eine Kippbewegung der über das Gelenk miteinander verbundenen Bauteile. Dabei muß insbesondere beim Zusammenwirken mehrerer Kugelgelenke, z.B. bei der Radaufhängung von lenkbaren Vorderrädern, die zwischen der Lagerschale und dem Kugelkopf erzeugte Reibung so gering wie möglich gehalten werden.

Aus der DE-C-33 26 960 ist bereits ein Kugelgelenk bekannt, bei dem die Lagerschale aus elastischem Kunststoff mit ihrer Außenfläche über Rippen an dem Gelenkgehäuse abgestützt ist. Unter dem Einfluß einer Gelenkvorspannung oder -belastung bilden sich auf der Innenseite der Lagerschale in den zwischen den Rippen liegenden Bereichen Schmiertaschen aus, die zu einer verbesserten Schmierung des Kugelgelenks und damit zu einer Verringerung der Reibung führen. Auch die DE-C-38 23 777 zeigt ein derartiges Kugelgelenk, bei dem die auf der Innenseite der Lagerschale auszubildenden Schmiertaschen durch auf der Lagerschalen-Außenseite angeordnete Rippen gebildet werden, die zur Schaffung eines gleichmäßigen Kipp- und Drehmomentes bezüglich der Gelenkachse schräg verlaufend ausgebildet. sind.

Die durch die Rippen gebildeten Schmiertaschen sind verhältnismäßig großflächig, so daß einerseits eine unerwünschte Gelenkelastizität entsteht und andererseits durch die Rippen ein relativ großes Lösemoment notwendig ist, um eine Relativbewegung zwischen dem Kugelkopf und der Lagerschale zu erzeugen. Dieses hohe Lösemoment ist insbesondere bei einer Mehrzahl zusammenwirkender Kugelgelenke, beispielsweise bei Mehrlenkerachsen von Kraftfahrzeugen, unerwünscht. Darüber hinaus ist die Höhe des Lösemomentes und die entstehende Reibung aufgrund der länglichen Ausdehnung der Rippen von der Bewegungsrichtung des Kugelkopfes relativ zu den auf der Lagerschale ausgebildeten Rippen abhängig. Außerdem haben die bekannten Rippen den Nachteil. daß ihre Wirkung nur bei engen Fertigungstoleranzen, insbesondere des Gelenkgehäuses erzielt wird

Die EP 0 355 537 A2 offenbart, im Bereich der das Schmiermittel aufnehmenden Nuten zwischen dem Gehäuse und der Gleitschale flache Aussparungen vorausehen, die die radiale Verformung der Gleitschale in Richtung gegen das Gehäuse ermöglichen.

Davon ausgehend liegt der Erfindung die Aufgabe zugrunde, ein Kugelgelenk der eingangs beschriebenen Art derart weiterzubilden, daß sich ein geringes Lösemoment bei verbesserter Schmierung und damit Lebensdauer ergibt.

Die Lösung dieser Aufgabenstellung ist durch die Kugelgelenke mit dem Merkmalen der Ansprüche 1 oder 2 gegeben.

Durch die Mehrzahl der ausgebildeten Abflachungen bzw. Erhebungen werden kleinere Schmiertaschen bzw. Lagerstellen definierter Form gebildet, so daß die Größe des Lösemomentes verringert und eine unerwünschte Gelenkelastizität vermieden wird. Bei einer Bewegung des Kugelkopfes relativ zu der Lagerschale fließt der Schmierstoff von einer Schmiertasche zu der nächsten, so daß sich eine Art hydrodynamische Schmierung ergibt und die Bauteile nahezu reibungsfrei gleiten. Aufgrund der gleichmäßigen Verteilung der durch die Abflachungen bzw. Erhebungen gebildeten Schmiertaschen bzw. Schmierzonen ist nicht nur eine vollflächige Schmierung bei einem insgesamt geringen Schmierstoffbedarf sichergestellt, sondern es ergibt sich auch ein geringes und von der Bewegungsrichtung unabhängiges Lösemoment.

Gemäß einem weiteren Merkmal der Erfindung können die Abflachungen bzw. Erhebungen in mehreren Reihen auf den Längen- und Breitengraden der kugelförmigen Oberfläche angeordnet sein. Durch eine derartige Verteilung können je nach Ausbildung und Größe der Schmiertaschen bzw. Lagerstellen entweder gleiche oder gewollt unterschiedliche Reibkräfte und/ oder Lösemomente in Verdreh- und Kipprichtung erzielt werden.

Bei einer vorteilhaften Ausgestaltung der Erfindung ist auf der Außenseite der Lagerschale ein hervorstehender Bund angeordnet, mit dem die Lagerschale durch Klemmung kraftschlüssig an dem Gelenkgehäuse festgelegt ist. Die Klemmung wird durch einen Verschlußring erzielt, durch den die Lagerschale unverdrehbar in dem Gelenkgehäuse gehalten wird. Die festgelegte Lagerschale liegt darüber hinaus formschlüssig an dem Gelenkgehäuse an, wodurch eine direkte Übertragung der Kräfte durch das Gelenk möglich ist und eine Gelenkverbindung ohne Spiel geschaffen wird. Durch das Klemmen der Lagerschale mittels des Verschlußringes ist eine einfache Montage des Kugelgelenkes möglich.

Vorzugsweise ist die Lagerschale zur Vergrößerung der Lagerfläche über den Bund hinweg in Richtung auf den Kugelzapfen verlängert, wobei zur Verbesserung der Schmierung auch die Verlängerung mit Schmiertaschen bzw. Schmierzonen bildenden Abflachungen bzw. Erhebungen versehen sein kann.

Auf der Zeichnung sind zwei Ausführungsbeispiele eines erfindungsgemäßen Kugelgelenkes dargestellt, und zwar zeigen:
- Fig. 1: einen Längsschnitt durch ein erstes Ausführungsbeispiel eines Kugelgelenks,
- Fig. 2: eine Seitenansicht der Lagerschale des Kugelgelenks nach Fig. 1,
- Fig. 3: einen vergrößerten Teilschnitt durch die in ein Gehäuse eingesetzte, unbelastete Lagerschale gemäß der Einzelheit III in Fig. 1,
- Fig. 4: einen vergrößerten Teilschnitt durch das belastete Kugelgelenk gemäß der Einzelheit IV in Fig. 1, und
- Fig. 5: einen Blick in die belastete Lagerschale gemäß Fig. 4 mit Kennzeichnung der Lagertaschen:
- Fig. 6: eine Seitenansicht eines zweiten Ausführungsbeispiels einer Lagerschale entsprechend der Darstellung in Fig. 2,
- Fig. 7: einen Blick in die belastete Lagerschale nach Fig. 6 gemäß der Darstellung in Fig. 5.

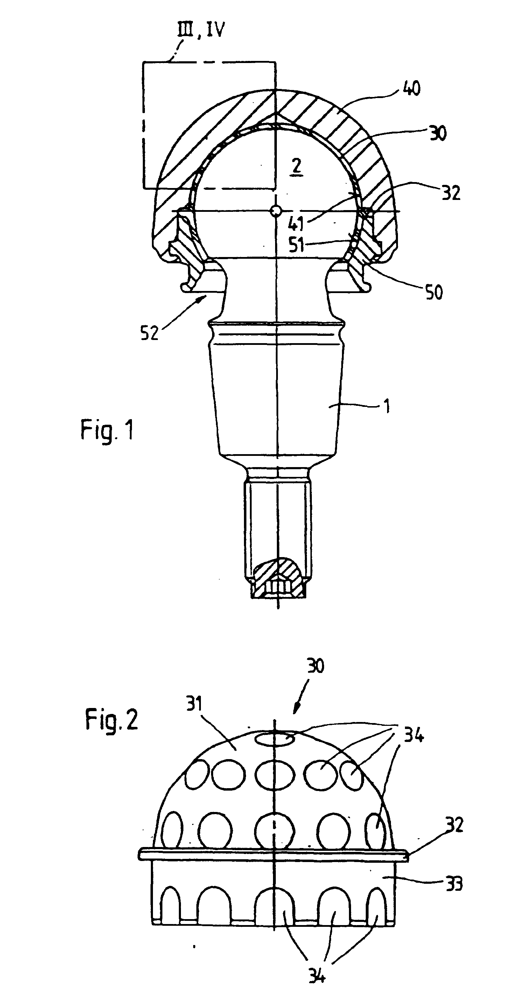

Die Fig. 1 zeigt ein Kugelgelenk mit einem Kugelzapfen 1, dessen Kugelkopf 2 unter Zwischen lage einer Lagerschale 30 in ein Gelenkgehäuse 40 eingesetzt ist. Das Gelenkgehäuse 40 nimmt die Lagerschale 30 in einer halbkugelförmigen Ausnehmung 41 auf. In das Gelenkgehäuse 40 ist ein Verschlußring 50 eingesetzt, durch dessen kugelringförmige Innenfläche 51 die Ausnehmung 41 zu einer Kugelkappe mit einer Öffnung 52 für den Kugelzapfen 1 verlängert wird.

Ein erstes Ausführungsbeispiel der zwischen dem Gelenkgehäuse 40 und dem Kugelkopf 2 eingesetzten Lagerschale 30 ist in Fig. 2 in einer Seitenansicht dargestellt. Die Lagerschale 30 umfaßt ein etwa halbkugelförmiges Oberteil 31, einen sich an das Oberteil 31 anschließenden Bund 32 sowie eine sich an den Bund anschließende zylinderförmige Verlängerung 33. Auf der Oberfläche des Oberteils 31 sowie der Verlängerung 33 der Lagerschale 30 sind Abflachungen 34 vorgesehen.

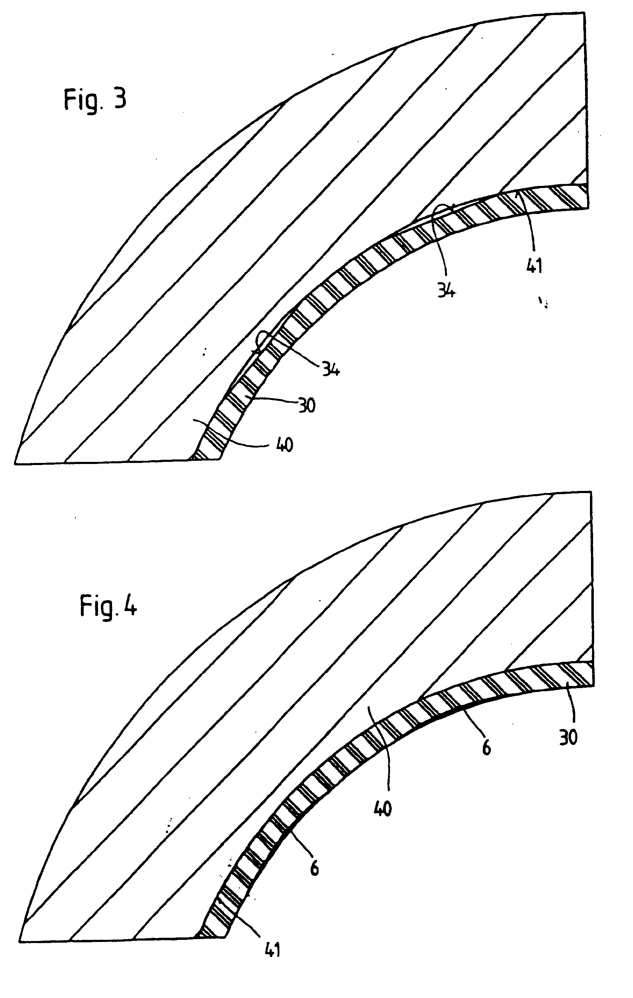

Wie in Fig. 3 deutlicher zu erkennen ist, sind die Abflachungen 34 in der Art der Grundfläche von Kugelkalotten als tangential auf der äußeren Oberfläche der Lagerschale 30 ausgeformte Ebenen gebildet. Der Rand jeder Abflachung 34 weist, wie in Fig. 2 deutlich zu erkennen ist, eine kreisförmige Form auf. Insgesamt sind die Abflachungen 34 in mehreren Reihen auf den Längen- und Breitengraden der kugelförmigen Oberfläche der Lagerschale 30 angeordnet. Ebenso ist auf der Verlängerung 33 ein Reihe von Abflachungen 34 ausgebildet.

Nach dem Zusammenbau ist die in das Gelenkgehäuse 40 eingesetzte Lagerschale 30 an diesem abgestützt. Der Kugelkopf 2 wird von der Lagerschale 30 über einen Winkel von mehr als 180° umschlossen, da auch, wie in Fig. 1 zu erkennen ist, das elastische Kunststoffmaterial der Verlängerung 33 durch die Innenfläche 51 des Verschlußringes 50 zu einem Ringsegment einer Kugelschale umgeformt wird. Durch diese Ausformung des Verschlußringes 50 wird aber nicht nur die Kontaktfläche zwischen dem Kugelkopf 2 und der Lagerschale 30 vergrößert; der Kugelkopf 2 wird auch unverlierbar in dem Gelenkgehäuse 40 aufgenommen. Die Lagerschale 30 ist kraftschlüssig durch Klemmung im Gelenkgehäuse 40 festgelegt, da der Bund 32 zwischen dem Gelenkgehäuse 40 und dem Verschlußring 50 eingeschlossen ist. Die Verlängerung 33 ist derart bemessen, daß sie bündig mit der Öffnung 52 abschließt.

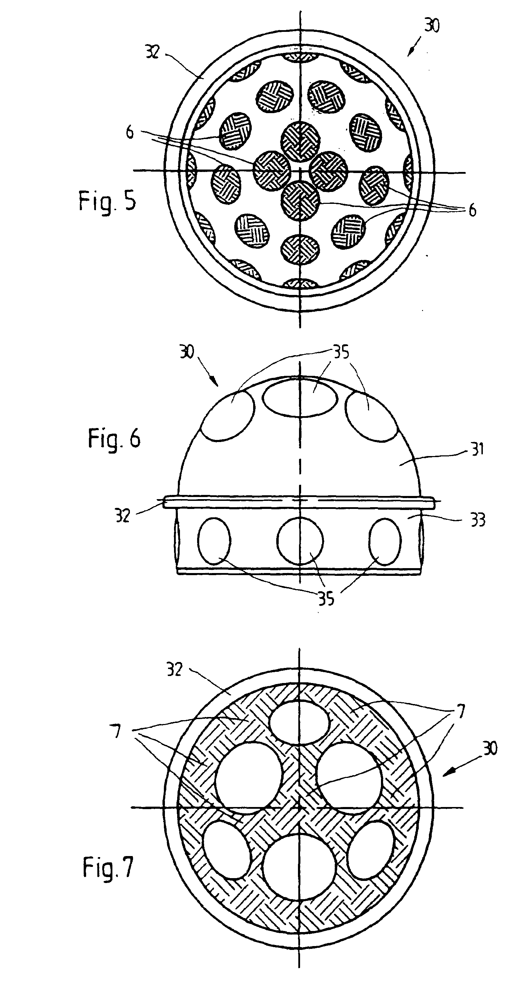

Die in das Gelenkgehäuse 40 eingesetzte Lagerschale 30 liegt, wie in Fig. 3 dargestellt ist, mit ihrer Außenfläche an der Ausnehmung 41 an. Lediglich im Bereich der Abflachungen 34 verläuft die Lagerschale 30 im Abstand zu der Ausnehmung 41. Unter dem Einfluß einer Gelenkvorspannung oder -belastung auf der Innenseite der Lagerschale 30 wird die in das Kugelgelenk eingebrachte Fettfüllung komprimiert, so daß das elastische Kunststoffmaterial der Lagerschale 30 derart verformt wird, daß die Außenfläche der Lagerschale 30 auch im Bereich der Abflachungen 34 an der Ausnehmung 41 anliegt, so daß sich auf der Innenseite der Lagerschale 30 sowohl im Bereich des Oberteils 31 als auch der Verlängerung 33 aufgrund der Abflachungen 34 Schmiertaschen 6 ausbilden, die mit Fett gefüllt sind. Diese Schmiertaschen 6 sind in Fig. 5 durch Schraffur gekennzeichnet.

Bei einer Bewegung des Kugelkopfes 2 relativ zur Lagerschale 30 wird das Fett jeder Schmiertasche 6 vom Kugelkopf 2 mitgenommen und fließt von dieser zur nächsten Schmiertasche 6. Dieses Prinzip der Schmierung bewirkt ein nahezu reibungsfreies Gleiten des Kugelkopfes 2 in der Lagerschale 30. Aufgrund der gleichmäßigen Verteilung der Abflachungen 34 sind auch die Schmiertaschen 6 gleichmäßig verteilt an der Lagerschale 30 ausgebildet, so daß sowohl eine vom Kugelzapfen 1 ausgeführte Drehbewegung als auch eine Kippbewegung bzw. eine Überlagerung der beiden Bewegungen eine gleichmäßige und zuverlässige Schmierung zur Folge hat. Während die Drehbewegung des Kugelzapfens 1 vollkommen frei ist, wird die Kippbewegung des Kugelzapfens 1 in herkömmlicher Weise durch die Größe der Öffnung 52 begrenzt.

Bei der zweiten Ausführungsform der Erfindung gemäß den Fig. 6 und 7 sind anstelle von Abflachungen Erhebungen 35 auf der Oberfläche der Lagerschale 30 ausgebildet, die wiederum kreisförmig oder oval sind. Nach dem Einbau der Lagerschale 30 in das Gelenkgehäuse 40 und Einführen des Kugelkopfes 2 entstehen bei einer Belastung des mit einer Fettfüllung versehenen Kugelgelenkes auf der Innenseite der Lagerschale 30 Schmierzonen 7, die zwischen den auf der Außenseite der Lagerschale 30 ausgebildeten Erhebungen 35 verlaufen. Auf diese Weise ergibt sich ein großflächiger Bereich von Schmiermittel zwischen Kugelkopf 2 und Lagerschale 30, der von definierten Lagerstellen unterbrochen ist, die ihrerseits durch die Größe und Lage der Erhebungen 35 gebildet werden, wie dies Fig. 7 zeigt.

### Bezugszeichenliste:

- 1: Kugelzapfen
- 2: Kugelkopf
- 30: Lagerschale
- 31: Oberteil
- 32: Bund
- 33: Verlängerung
- 34: Abflachung
- 35: Erhebung
- 40: Gelenkgehäuse
- 41: Ausnehmung
- 50: Verschlußring
- 51: Innenfläche
- 52: Öffnung
- 6: Schmiertasche
- 7: Schmierzone

## Patentansprüche

1. Kugelgelenk für Kraftfahrzeuge mit einer zwischen einem Gelenkgehäuse (40) und einem Kugelkopf (2) eines dreh-bzw. kippbeweglichen Kugelzapfens (1) eingesetzten Lagerschale (30) aus einem elastischen Kunststoff, die mit ihrer Außenfläche im Gelenkgehäuse (40) abgestützt ist. wobei unter dem Einfluß einer Gelenkvorspannung oder -belastung auf der Innenseite der Lagerschale (30) mit Schmierstoff gefüllte Bereiche ausgebildet sind.
**dadurch gekennzeichnet,**
**daß** die Lagerschale (30) auf ihrer am Gelenkgehäuse (40) anliegenden Oberfläche mit einer Mehrzahl gleichmäßig auf der Oberfläche verteilter Abflachungen (34) versehen ist und bei montiertem Kugelgelenk infolge der Schmierstoff-Füllung und der Elastizität des Kunststoffmaterials der Lagerschale (30) die Außenfläche der Lagerschale (30) auch im Bereich der Abflachungen (34) am Gelenkgehäuse (40) anliegt und sich dadurch auf der dem glatten Kugelkopf (2) zugewandten Innenseite der Lagerschale (30) Schmiertaschen (6) bilden.

2. Kugelgelenk für Kraftfahrzeuge mit einer zwischen einem Gelenkgehäuse (40) und einem Kugelkopf (2) eines dreh- bzw. kippbeweglichen Kugelzapfens (1) eingesetzten Lagerschale (30) aus einem elastischen Kunststoff, die mit ihrer Außenfläche im Gelenkgehäuse (40) abgestützt ist. wobei unter dem Einfluß einer Gelenkvorspannung oder -belastung auf der Innenseite der Lagerschale (30) mit Schmierstoff gefüllte Bereiche ausgebildet sind. **dadurch gekennzeichnet, daß** die Lagerschale (30) auf ihrer am Gelenkgehäuse (40) anliegenden Oberfläche mit einer Mehrzahl auf der Oberfläche verteilter Kreisförmiger oder Ovaler Erhebungen (35) versehen ist und bei montiertem Kugelgelenk infolge der Schmierstoff-Füllung und der Elastizität des Kunststoffmaterials der Lagerschale (30) die Außenfläche der Lagerschale (30) nicht nur im Bereich der Erhebungen (35), sondern auch in den Bereichen zwischen den Erhebungen (35) am Gelenkgehäuse (40) anliegt und sich hierdurch auf der dem glatten Kugelkopf (2) zugewandten Innenseite der Lagerschale (30) mit Schmierstoff gefüllte Schmierzonen (7) bilden, wobei sich ein großflächiger Bereich von schmiermittel zwischen Kugelkopf und Lagerschale ergibt, der von durch die größe und Lage der Erhebungen gebildete Lagerstellen unterbrochen ist.

3. Kugelgelenk nach Anspruch 1 oder 2. **dadurch gekennzeichnet. daß** die Abflachungen (34) bzw. Erhebungen (35) in mehreren Reihen auf den Längen- und Breitengraden der kugelförmigen Oberfläche angeordnet sind.

4. Kugelgelenk nach einem der Ansprüche 1 bis 3. **dadurch gekennzeichnet. daß** auf der Außenseite der Lagerschale (30) ein hervorstehender Bund (32) zur kraftschlüssigen Festlegung der Lagerschale (30) durch Klemmung im Gelenkgehäuse (40) mittels eines Verschlußringes (50) angeordnet ist.

5. Kugelgelenk nach Anspruch 4. **dadurch gekennzeichnet. daß** die Lagerschale (30) über den Bund (32) hinweg in Richtung auf den Kugelzapfen (1) verlängert ist.

6. Kugelgelenk nach Anspruch 5, **dadurch gekennzeichnet, daß** auch im Bereich der Verlängerung (33) Schmiertaschen (6) bzw. Schmierzonen (7) bildende Abflachungen (34) bzw. Erhebungen (35) ausgebildet sind.

## Claims

1. A ball joint for motor vehicles, comprising a bearing shell (30) of a resilient plastics material inserted between a joint housing (40) and the ball head (2) of a rotatable or tiltable ball-headed spindle (1), said bearing shell (30) being supported with its outer surface in the joint housing (40), wherein, under the influence of joint pretensioning or preloading, areas filled with lubricant are formed on the inside of the bearing shell (30), **characterised in that** the bearing shell (30) is provided, on its surface lying against the joint housing (40), with a plurality of flattened zones (34) distributed evenly over the surface and, when the ball joint is assembled, the outer surface of the bearing shell (30) lies against the joint housing (40) even in the area of the flattened zones (34) as a result of the lubricant filling and the resilience of the plastics material of the bearing shell (30) and lubrication pockets (6) are formed thereby on the inside of the bearing shell (30) facing the smooth ball head (2).

2. A ball joint for motor vehicles comprising a bearing shell (30) of a resilient plastics material inserted between a joint housing (40) and the ball head (2) of a rotatable or tiltable ball-headed spindle (1), said bearing shell (30) being supported with its outer surface in the joint housing (40), wherein, under the influence of joint pretensioning or preloading, areas filled with lubricant are formed on the inside of the bearing shell (30), **characterised in that** the bearing shell (30) is provided, on its surface lying against the joint housing (40), with a plurality of circular or oval raised portions (35) distributed over the surface and, when the ball joint is assembled, the outer surface of the bearing shell (30) lies against the joint housing (40) not only in the area of the raised portions (35) but also in the areas between the raised portions (35) as a result of the lubricant filling and the resilience of the plastics material of the bearing shell (30) and lubrication zones (7) filled with lubricant are formed thereby on the inside of the bearing shell (30) facing the smooth ball head (2), wherein an extensive area of lubricant results between ball head and bearing shell, which is interrupted by bearing points formed by the size and position of the raised portions.

3. A ball joint according to claim 1 or claim 2, **characterised in that** the flattened zones (34) or raised portions (35) are arranged in several rows running up and down and from side to side over the spherical surface.

4. A ball joint according to one of claims 1 to 3, **characterised in that** a protruding collar (32) is arranged on the outside of the bearing shell (30) so that the bearing shell (30) may be frictionally secured in the joint housing (40) by clamping by means of a locking ring (50).

5. A ball joint according to claim 4, **characterised in that** the bearing shell (30) extends beyond the collar (32) in the direction of the ball-headed spindle (1).

6. A ball joint according to claim 5, **characterised in that** flattened zones (34) or raised portions (35) forming lubrication pockets (6) or lubrication zones (7) respectively are also provided in the area of the extension (33).

## Revendications

1. Joint sphérique pour véhicules automobiles avec une coquille de coussinet (30) en plastique élastique placée entre un boîtier du joint articulé (40) et une sphère (2) d'un pivot sphérique (1) déplaçable par rotation et/ou par basculement, la surface extérieure de cette coquille de coussinet s'appuyant dans le boîtier du joint articulé (40) et des zones remplies de lubrifiant étant formées sous l'effet d'une précontrainte ou d'une charge du joint articulé sur la partie intérieure de la coquille de coussinet (30), **caractérisé en ce que** la coquille de coussinet (30) est dotée sur sa surface adjacente au boîtier du joint articulé (40) d'une pluralité d'aplatissements (34) répartis de manière homogène sur la surface, et **en ce que** lorsque le joint sphérique est monté, la surface extérieure de la coquille de coussinet (30) est adjacente au boîtier du joint articulé (40), même dans la zone des aplatissements (34), en raison du remplissage de lubrifiant et de l'élasticité de la matière synthétique de la coquille de coussinet (30) et qu'il en résulte la formation de creux de graissage (6) sur la partie intérieure de la coquille de coussinet (30) tournée vers la sphère (2) lisse.

2. Joint sphérique pour véhicules automobiles avec une coquille de coussinet (30) en plastique élastique placée entre un boîtier du joint articulé (40) et une sphère (2) d'un pivot sphérique (1) déplaçable par rotation et/ou par basculement, la surface extérieure de cette coquille de coussinet s'appuyant dans le boîtier du joint articulé (40) et des zones remplies de lubrifiant étant formées sous l'effet d'une précontrainte ou d'une charge du joint articulé sur la partie intérieure de la coquille de coussinet (30), **caractérisé en ce que** la coquille de coussinet (30) est dotée sur sa surface adjacente au boîtier du joint articulé (40) d'une pluralité d'élévations (35) rondes ou ovales réparties sur la surface, et que lorsque le joint sphérique est monté, la surface extérieure de la coquille de coussinet (30) est adjacente au boîtier du joint articulé (40) en raison du remplissage de lubrifiant et de l'élasticité de la matière plastique de la coquille de coussinet (30) non seulement dans la zone des élévations (35), mais aussi dans les zones comprises entre les élévations (35), et qu'il en résulte la formation de zones de graissage (7) remplies de lubrifiant sur la partie intérieure de la coquille de coussinet (30) tournée vers la sphère (2) lisse, une zone de lubrifiant d'une surface importante étant alors générée entre la sphère et la coquille de coussinet et étant interrompue par les points d'appui formés par la dimension et l'emplacement des élévations.

3. Joint sphérique selon la revendication 1 ou 2 **caractérisé en ce que** les aplatissements (34) et/ou les élévations (35) sont disposés sur plusieurs rangées sur les degrés de latitude et de longitude de la surface sphérique.

4. Joint sphérique selon l'une quelconque des revendications 1 à 3 **caractérisé en ce qu'**une collerette (32) en saillie est disposée sur la partie extérieure de la coquille de coussinet (30) pour fixer par adhérence par serrage dans le boîtier du joint articulé (40) la coquille de coussinet (30) à l'aide d'un jonc de verrouillage (50).

5. Joint sphérique selon la revendication 4 **caractérisé en ce que** la coquille de coussinet (30) se prolonge au-delà de la collerette (32) en direction du pivot sphérique (1).

6. Joint sphérique selon la revendication 5 **caractérisé en ce que** des aplatissements (34) et/ou des élévations (35) formant des creux de graissage (6) et/ou des zones de graissage (7) sont également formés dans la zone du prolongement (33).
